(19) Europäisches Patentamt
European Patent Office
Office européen des brevets

(11) **EP 2 000 299 A1**

(12) **EUROPEAN PATENT APPLICATION**
published in accordance with Art. 153(4) EPC

(43) Date of publication:
**10.12.2008 Bulletin 2008/50**

(51) Int Cl.:
**B32B 9/00** (2006.01)   **B65D 65/40** (2006.01)
**B65D 81/24** (2006.01)   **C23C 14/06** (2006.01)

(21) Application number: **07737828.9**

(22) Date of filing: **06.03.2007**

(86) International application number:
**PCT/JP2007/054271**

(87) International publication number:
**WO 2007/111092 (04.10.2007 Gazette 2007/40)**

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **24.03.2006 JP 2006082438**

(71) Applicant: **Konica Minolta Medical & Graphic, Inc. Hino-shi, Tokyo 191-8511 (JP)**

(72) Inventor: **TAKEYAMA, Toshihisa Tokyo 163-0512 (JP)**

(74) Representative: **Henkel, Feiler & Hänzel Patentanwälte Maximiliansplatz 21 80333 München (DE)**

(54) **TRANSPARENT BARRIER SHEET AND METHOD FOR PRODUCING TRANSPARENT BARRIER SHEET**

(57) Disclosed is an optimum transparent barrier sheet securing a desired gas barrier performance and exhibiting high gas barrier performance even under high temperature, high humidity conditions. This transparent barrier sheet has such a transparency that enables to see an object wrapped therein from the outside, and a metal detector can be used for detecting the object wrapped in this transparent barrier sheet. Furthermore, the gas barrier property of this transparent barrier sheet hardly deteriorates even when the sheet is bent for use. Also disclosed is a method for producing such a transparent barrier sheet. Specifically disclosed is a transparent barrier sheet having at least one transparent inorganic thin film layer and at least one transparent organic thin film layer on the same side of a base sheet. This transparent barrier sheet is **characterized in that** the surface roughness Ra of the outermost layer of the laminated thin film layers is not more than 5 nm, the transparent inorganic thin film layer has a thickness of not less than 20 nm but not more than 500 nm, and the relation represented by the formula (1) below is satisfied with the thickness of the transparent inorganic thin film layer being d1 and the thickness of the transparent organic thin film layer being d2. Formula (1): $0.5 \leq d2/d1 \leq 10$

FIG. 1

EP 2 000 299 A1

**Description**

**FIELD OF THE INVENTION**

The present invention relates to a transparent packaging barrier sheet used for packaging in the field of foods and medicines or a transparent barrier sheet for use in electronic instrument-related components, and in particular to a transparent barrier sheet exhibiting extremely low permeability of gas such as oxygen or water vapor and a producing method thereof.

**BACKGROUND OF THE INVENTION**

Recently, packaging materials used for packaging foods or medicines require transparency for confirmation of contents and gas-barrier capability to inhibit adverse influences due to gases deteriorating contents, such as permeated oxygen, water vapor or the like. There were employed packaging materials using, as a gas-barrier layer, a metal foil composed of metals such as aluminum or the like when relatively high gas barrier ability was required. However, such packaging materials using a metal foil as a gas-barrier layer, which exhibit enhanced gas barrier capability and are barely affected by temperature or humidity, have several disadvantages such that the contents cannot be viewed through the packaging material and a metal detector cannot be employed for inspection of the contents, arising in problems.

Recently, there have been developed barrier materials exhibiting enhanced performance, for instance, a transparent barrier material provided, on a plastic film, with a deposited metal oxide film such as silicon oxide or aluminum oxide. However, when increasing the layer thickness to achieve enhanced gas barrier capability, such inorganic transparent layer often cracks due to inadequate pliability or flexibility, leading to lowering or failure of gas barrier capability.

To overcome the foregoing problems, there was proposed coating of an organic layer of a curing structure and an inorganic layer on the surface of a transparent plastic resin substrate, whereby enhanced gas barrier capability was realized, as described in patent documents 1 and 2. Although various studies were made with respect to the thickness of the inorganic layer to provide targeted barrier capability, there was barely discussed design of the thickness of an organic layer and an inorganic layer.

With respect to the outermost surface of the coated organic layer and an inorganic layer, there was a proposal with the intension of application unto the substrate of an organic electroluminescence (EL) as described in, for example, patent document 3. However, nothing was taken into account with respect to effects on bendability of the substrate.

Patent document 1: JP-A No. 2003-276115
Patent document 2: JP-A No. 2003-300273
Patent document 3: JP-A No. 2005-324406

**DISCLOSURE OF THE INVENTION**

**PROBLEM TO BE SOLVED**

The present invention has come into being in light of the foregoing concerns. Thus, it is an object of the invention to provide an optimum transparent barrier sheet which attains the intended gas barrier capability, maintains transparency enabling through-vision of contents after they are packaged, enables use of a metal detector for inspection of contents, exhibits enhanced gas barrier capability and results in minimal deterioration of gas barrier capability even when bent.

**MEANS FOR SOLVING THE PROBLEM**

The foregoing problems can be solved by the following means.

1. A transparent barrier sheet comprising on one side of a substrate sheet at least one transparent inorganic layer and at least one transparent organic layer, wherein the outermost layer of the inorganic layer and the organic layer exhibits a surface roughness Ra of not more than 5 nm and the transparent inorganic layer exhibits a thickness of not less than 20 nm and not more than 500 nm, and the transparent barrier sheet satisfying the following relation represented by the following requirement (1):

$$0.5 \leq d2/d1 \leq 10 \tag{1}$$

wherein d1 is a thickness of the transparent inorganic layer and d2 is a thickness of the transparent organic layer.

2. The transparent barrier sheet as described in the foregoing 1, wherein the transparent barrier sheet satisfies the following requirement (2):

$$1.0 \leq d2/d1 \leq 5.0 \qquad\qquad (2)$$

3. The transparent barrier sheet as described in the foregoing 1 or 2, wherein the organic layer exhibits a thickness of 50 nm to 2.0 $\mu$m.

4. The transparent barrier sheet as described in any one of the foregoing 1 to 3, wherein on the substrate sheet, the inorganic layer and the organic layer are provided in the order set forth.

5. The transparent barrier sheet as described in the foregoing 4, wherein a transparent primer layer containing an organic compound is provided between the substrate sheet and the inorganic layer.

6. The transparent barrier sheet as described in the foregoing 4 or 5, wherein when a unit comprises a transparent inorganic layer and a transparent organic layer, two units are provided on the substrate sheet.

7. The transparent barrier sheet as described in any one of the foregoing 1 to 6, wherein the transparent inorganic layer comprises a metal oxide or a metal nitride.

8. The transparent barrier sheet as described in the foregoing 7, wherein the metal oxide or the metal nitride mainly comprises at least a compound selected from the group consisting of a silicon oxide, an aluminum oxide, a silicon nitride and a silicon oxynitride.

9. The transparent barrier sheet as described in any one of the foregoing 1 to 8, wherein the transparent organic layer comprises a compound formed of a polymerizable compound selected from the group consisting of a radically polymerizable compound, a cationically polymerizable compound, an anionically polymerizable compound and a compound containing a copolymerizable functional group.

10. A method of preparing a transparent barrier sheet as described in any one of the foregoing 1 to 9, the comprising forming a transparent inorganic transparent layer and a transparent organic transparent layer on a substrate, wherein a maximum temperature of the substrate sheet when forming the transparent inorganic transparent layer and the transparent organic transparent layer falls within a range of 243 K to 383 K.

11. A method of preparing a transparent barrier sheet as described in any one of the foregoing 1 to 9, the method comprising forming a transparent inorganic layer and a transparent organic layer on a substrate, wherein the following requirement (3) is satisfied:

$$1.21 \leq (T \times S)/1000 \leq 460 \; [K \cdot sec] \qquad\qquad (3)$$

wherein T is the maximum temperature of the substrate when forming the transparent inorganic layer and the transparent organic layer and S is a time necessary to form the transparent inorganic layer or the transparent organic layer.

## EFFECT OF THE INVENTION

According to the invention, there is provided an optimum transparent barrier sheet which attains the intended gas barrier capability, maintains transparency enabling through-vision of contents after they are packaged, enables use of a metal detector for inspection of contents, exhibits enhanced gas barrier capability and results in minimal deterioration of gas barrier capability even when bent.

## BRIEF EXPLANATION OF THE DRAWINGS

FIG. 1 illustrates a sectional view of an example of a transparent barrier sheet of the invention.
FIG. 2 illustrates a sectional view of another example of a transparent barrier sheet of the invention.
FIG. 3 illustrates a sectional view of another example of a transparent barrier sheet of the invention.
FIG. 4 illustrates a sectional view of another example of a transparent barrier sheet of the invention.
FIG. 5 illustrates a sectional view of another example of a transparent barrier sheet of the invention.

FIG. 6 illustrates a film deposition apparatus usable in the invention, according to a catalytic chemical vapor deposition process.

**DESCRIPTION OF NUMERAL**

1, 21, 31, 41 and 51: Substrate sheet
22, 32, 42, 52 and 52': Transparent primer layer
111,211,311,321,411,421,431, 441, 451, 511,
521, 511' and 521': Transparent inorganic layer
112, 212, 312, 322, 412, 422, 432, 442, 452, 512,
522, 512' and 522' : Transparent organic layer
60: Vacuum vessel
61: Substrate sheet having transparent primer layer
62: Holding mechanism
63: Cooling mechanism
64: Cooling mechanism
65: Heating body (tungsten)
66: Inlet
67: Hydrogen source
68: Silane gas source
69: Shielding member
601: Shielding member driving means
602: Power source to heat a heating body
603: evacuation pump
604: Cooling source
605: Inlet means
606: Air space
V66, V67, V68: Gate valve

**PREFERRED EMBODIMENTS OF THE INVENTION**

There will be further described a transparent barrier sheet of the invention and a production method thereof.

Transparent barrier sheet

The transparent barrier sheet of the invention comprises at least one transparent inorganic layer and at least one transparent organic layer on one side of a substrate sheet, in which the outermost layer of the layer side exhibits a surface roughness Ra (arithmetic average surface roughness) of not more than 5 nm and the following requirement (1) is met:

$$0.5 \leq d2/d1 \leq 10 \qquad\qquad\qquad (1)$$

where d1 is the thickness (nm) of the transparent inorganic layer and d2 is the thickness (nm) of the transparent organic layer.
The surface roughness Ra is obtained when the surface roughness is measured at plural sites (at least five sites) within an area of 200 $\mu$m x 200 $\mu$m by using a noncontact 3D surface measuring instrument. The expression, transparent means that the visible light transmittance is not less than 50% and not more than 95%.
The surface roughness Ra refers to the average surface roughness value (arithmetic average surface roughness), which may also be denoted as a roughness average. The surface roughness Ra, which is a three-dimensional Ra, is defined by the following formula:

$$Ra = \frac{1}{MN} \sum_{k=1}^{M} \sum_{j=1}^{N} \left| f(Z_{jk}) \right|$$

where M and N are the number of data points in directions X and Y, respectively, and direction $Z_{jk}$ is the surface height relative to the mean plane. Thus, heights are measured at (M x N) points within a specific measured length, i.e., M points in the X direction and N points in the Y direction and a roughness surface is determined, in which $Z_{jk}$ represents a height at the point corresponding to the j-th point in the X direction and the k-th point in the Y direction.

The surface roughness Ra may also be calculated per the ANSI B46.1 standard or JIS-B-0601.

The surface roughness Ra is obtained when the surface roughness is measured at plural sites (at least five sites) within an area of 200 $\mu$m x 200 $\mu$m by using a noncontact 3D surface measuring instrument (e.g., WYKO NT1100, produced by Veeco).

There will be the surface roughness Ra and thickness of a transparent barrier sheet.

The greater the area in contact with gases such as water vapor and oxygen deteriorates barrier capability. Accordingly, it is effective for barrier capability to make the surface area as small as possible. In the transparent barrier sheet of the invention, the surface roughness (Ra) of the outermost layer surface on the layer side is preferably not more than 5 nm. In one preferred embodiment of the invention, barrier capability depends on the transparent inorganic layer and taking into account flexibility or deformation of the substrate sheet in addition to barrier capability as the primary object of the invention, the thickness of the transparent inorganic layer is preferably from 20 nm to 500 nm. Although, depending on the composition of an inorganic layer, a thickness of less than 20 nm often cannot achieve sufficient barrier capability, while in the case of a thickness of more than 500 nm, the transparent inorganic layer is too hard to follow flexibility as a characteristic of a sheet composed of plastic resin, often resulting in troubles such as cracking. Further, when the thickness (d1) of the transparent inorganic layer and the thickness (d2) of the transparent organic layer fall with the range as defined in equation (1), in other words, when the thickness of the transparent organic layer falls within the range of not less than 10 nm and not more than 5000 nm, the organic layer functions effectively as a stress relaxation layer to relax stress applied to the inorganic layer and can also smoothen protruding pin-hole defects due to the substrate sheet. When the surface of a substrate sheet is smooth with less defective, the thickness of a transparent organic layer is preferably not more than 2500 nm. In the case of attaching importance to a function as a stress relaxation layer to relieve stress applied to a transparent inorganic layer, the thickness of a transparent organic layer is preferably not less than 20 nm. Accordingly, the range defined in the foregoing equation (1) falling within the range defined in the following equation (2) is preferred to cause barrier capability to be compatible with flexibility.

$$1.0 \leq d2/d1 \leq 5.0 \qquad (2)$$

Next, there will be described the respective constituting members of the transparent barrier sheet of the invention.

The substrate sheet used in the invention is not specifically limited and can employ any material not causing dimensional deformation in the preparation method described later or curling after layer formation. Examples of resin to form a sheet include a polyester resin such as polyethylene terephthalate (PET) and polyethylene naphthalate, a polyolefin resin such as polyethylene and polypropylene, styrene resin such as polystyrene and acrylonitrile-styrene copolymer, an acryl resin such as polymethyl methacrylate and methacrylic acid-maleic acid copolymer, a cellulose resin such as triacetyl cellulose, a vinyl chloride resin such as polyvinyl chloride, imide resin such as polyimide, fluorinated polyimide and polyether-imide, an amide resin such as Nylon 6, Nylon 66 and MXD Nylon 6, a polycarbonate resin formed of bisphenol A, bisphenol Z or 1,1-bis(4-hydroxyphenyl)-3,3,5-trimethylcyclohexane, a fluororesin, a polyacrylate resin, a polyethersufone resin, polysulfone resin, polyetherketone resin, and alicyclic type polyolefin resin such as a copolymer of alicyclic olefins.

A substrate sheet usable in the invention may be stretched or unstretched unless hindering the object of the invention, and one which is superior in mechanical strength or dimensional stability is preferred. Of these, biaxially stretched polyethylene terephthalate or polyethylene naphthalate is preferred for use in thin substrate sheets. In the case of a relatively thick substrate sheet, a polyester resin such as polyethylene terephthalate or polyethylene naphthalate, a polyacrylate resin, a polyethersulfone resin, polycarbonate resin or an alicyclic polyolefin resin is preferred in terms of dimensional stability and heat resistance.

Onto the substrate sheet of the invention may be incorporated various additives within the range of not hindering effects of the invention. Examples of such additives include a plasticizer, a dye or pigment, an antistatic agent, a UV absorbed, an antioxidant, inorganic microparticles, an anti-peeling agent, a leveling agent, an inorganic lamellar silicate compound and a lubricant.

The thickness of a substrate sheet can appropriately be chosen according to the use of the transparent barrier sheet of the invention. Taking into account capability as a packaging material, there can optionally be used not only a single resin sheet but also a layered sheet composed of combined sheets differing in quality. Further, taking into account processability in formation of a transparent inorganic layer or a transparent organic layer, the substrate thickness is preferably from 6 to 400 nm in practical use, and more preferably from 25 to 100 nm.

In the case of the use for electronic devices such as a liquid crystal display element, a dye type solar battery, an organic or inorganic EL, electronic paper and a fuel cell, the substrate thickness is appropriately chosen according to the use thereof. In the case of the use instead of a glass substrate, for instance, a thickness of 50 to 800 $\mu$m is preferred to fit the subsequent preparation process of glass substrate specification, and a thickness of 50 to 400 n is more preferred.

When taking into account mass production of the transparent barrier sheet of the invention, a continuous long length of film is preferred to enable continuous formation of a transparent inorganic layer and a transparent organic layer on a substrate sheet.

In one preferred embodiment of the invention, a transparent primer layer is provided on the substrate layer.

A transparent primer layer is provided on the substrate sheet to enhance adhesion to the layer provided on the primer layer and achieve smoothness of the layer. A transparent primer layer can be formed by coating a solution of resin dissolved in solvents, followed by drying. After being dried, a curing reaction may be undergone. Alternatively, a metal alkoxide, a ultraviolet curing resin, an electron beam curing resin, a thermo-setting resin or the like is provided without using any solvent, or a transparent primer layer forming composition which also uses no solvent is diluted with a solvent and coated, followed by being dried and cured.

Examples of a resin used for the resin coating solution described above include a polyester resin a polyurethane resin, an acryl resin, a polystyrene resin, polystyrene resin, a cellulose resin, polyvinyl acetal resin, and polyvinyl chloride resin, and these resins are appropriately chosen and used. A metal alkoxide includes one obtained from metals such as silicon, titanium and zirconium, and alcohols such as methyl alcohol, ethyl alcohol and isopropyl alcohol. As an electron beam curing resin or a ultraviolet curing resin, compounds containing an unsaturated double bond within the molecule such as a styrene monomer or a (meth)acryl monomer are used alone or in combination with a radically polymerizable compound, an anionically polymerizable compound, a cationic-polymerizable monomer or a compound containing a co-polymerizable functional group used for formation of a transparent organic layer, as described later. Such a composition as described above is coated on a substrate sheet and cured to form a transparent primer layer. A thermo-setting resin is also usable. Examples of such a thermosetting resin include commonly known thermo-setting resins such as a phenol resin, an epoxy resin, a melamine resin, a urea resin, unsaturated polyester and alkyd resin, and a combination of compounds or resins containing an epoxy group and a mercapto group, a combination of compounds or resins containing an epoxy group and an amino group, a combination of an acid anhydride and a compound or resins containing an amino group, and a combination of compounds or resins containing a hydroxyl group and an isocyanate group.

The thickness of a transparent primer layer, depending on surface properties of the used substrate sheet, is preferably from 0.05 to 5.0 $\mu$m, and more preferably from 0.1 to 2.0 $\mu$m. The transparent primer layer may be comprised of a single layer or plural layers.

Next, there will be described a transparent inorganic layer and a transparent organic layer, provided on a transparent primer layer which is provided on a substrate sheet.

Any transparent metal oxide or metal nitride exhibiting barrier capability can be used as a transparent inorganic layer. Specifically, as a metal oxide or a metal nitride forming a transparent inorganic layer is used an oxide or nitride containing at least one appropriately chosen from Si, Al, In, Sn, Zn, Mg, Ca, K, Sn, Na, B, Ti, Pb, Zr, Y, In, Ce, and Ta. of these, one which does not exhibit a definite absorption peak in the visible region is preferred for the purpose of confirmation of contents or for use in an electronic device.

Of the foregoing compounds are usable oxides of metals such as Silicon (Si), aluminum (Al), zinc (Zn), magnesium (Mg), calcium (Ca), potassium (K), tin (Sn), sodium (Na), boron (B), titanium (Ti), lead (Pb), zirconium (Zr), yttrium (Y) and indium (In). Notation of a metal oxide is represented in terms of $MO_x$, for example, $SiO_x$, $AlO_x$ and $MgO_x$ (in which M represents a metal element and a value of x falls within a range depending on a metal element). As the range of a x-value, for example, silicon (Si) is $0<x<2$, aluminum (Al) is $0<x\leq1.5$, zinc (Zn) is $0<x\leq1$, magnesium (Mg) is $0<x\leq1$, calcium (Ca) is $0<x\leq1$, potassium (K) is $0<x\leq0.5$, tin (Sn) is $0<x\leq2$, sodium (Na) is $0<x\leq0.5$, boron (B) is $0<x\leq1.5$, titanium (Ti) is $0<x\leq2$, lead (Pb) is $0<x\leq1$, zirconium (Zr) is $0<x\leq2$, yttrium (Y) is $0<x\leq1.5$, and indium (In) is $0<x\leq1$. In the invention, an oxide of silicon (Si) or aluminum (Al) is preferred in terms of barrier capability. Silicon oxide ($SiO_2$) is preferably in the range of $1.0\leq x\leq2.0$ and aluminum oxide ($Al_2O_3$) is preferably in the range of $0.5\leq x\leq1.5$.

Of inorganic nitrides, silicon nitride is preferred in terms of transparency and as its mixture, silicon oxynitride is preferred. Silicon oxynitride is represented as $SiO_xN_y$ and the ratio of x to y is preferably $1<x<2$ and $0<y<1$ as oxygen-rich membrane when attaching importance to enhancement of adhesion and is also preferably $0<x<0.8$ and $0.8<y<1.3$ when attaching importance to enhancement of barrier to water vapor.

The thickness of a transparent inorganic layer is preferably not less than 10 nm and not more than 1000 nm, and more preferably not less than 20 nm and not more than 500 nm.

Next, there will be described a transparent organic layer.

The transparent organic layer of the invention is preferably a polymeric layer obtained by polymerization of at least one of a radically polymerizable compound, a cationically polymerizable compound, an anionically polymerizable compound and a co-polymerizable compound (or a compound containing a functional group capable of copolymerizing.

Any compound containing a functional group capable of performing radical polymerization is usable as such a radically polymerizable compound but a compound having an ethylenically unsaturated bond or double bond (which is also denoted as an ethylenically unsaturated compound) is preferred in terms of availability.

Examples of such an ethylenically unsaturated compound include a compound containing a vinyl group in the molecule, such as styrene derivatives, vinyl acetate derivatives and vinyl pyrrolidone derivatives, a compound containing a (meth)acryloyl group in the molecule, and a compound containing an acyloxy group or an acylamido group. Of these, a compound containing a (meth)acryloyl group in the molecule is preferred in terms of steric hindrance in radical polymerization. In the invention, the (meth)acryloyl group refers to an acryloyl group or a methacryloyl group.

Examples of a compound containing one (meth)acryloyl group include a (meth)acrylate or (meth)acrylamide of a substituted or unsubstituted phenol, nonylphenol or 2-ethylhexanol and their adducts with alkylene oxide. Examples of a compound containing two (meth)acryloyl groups include a di-(meth)acrylate or di-(meth)acrylamide of a substituted or unsubstituted bisphenol A, bisphenol F, fluorene or isocyanuric acid and their adducts with alkylene oxide, and di-(meth)acrylate or di-(meth)acrylamide of a polyalkylene glycol such as ethylene glycol or propylene glycol. Examples of a compound containing three (meth)acryloyl group include tri-(meth)acrylate or tri-(meth)acrylamide of pentaerythritol, trimethylolpropane or isocyanuric acid, and their adducts with alkylene oxide. Examples of a compound containing four or more (meth)acryloyl groups include a poly-(meth)acrylate or poly-(meth)acrylamide of pentaerythritol or dipentaerythritol. There are also cited (meth)acryl or (meth)acrylamide, such as a urethane acrylate having a urethane bond skeleton, a polyester acrylate having a ester bond skeleton and epoxy(meth)acrylate in which an epoxy compound is added with (meth)acrylic acid. Further, there are also chosen compounds described in JP-A Nos. 9-104085, 2000-122005, 2000-216049, 2003-172935, 2003-233076, 2003-276115, 2003-322859, 2004-1296, 2004-359899 and 2004-103401; Japanese translation of PCT international patent application Nos. 8-512256, 11-503195, 2001-508089, 2001-518561, 2002-528568, 2004-532330, 2004-533313 and 2005-524058.

A compound containing plural (meth)acryloyl group may one containing plural (meth)acrylates, one containing plural (meth)acrylamides or one containing at least one (meth)acrylate and at least one (meth)acrylamide.

The foregoing radically polymerizable compounds can be polymerized by commonly known methods such as electron beam curing or ultraviolet curing. A polymerization initiator to initiate polymerisation is an essential component in polymerization of a radically polymerizable compound through photopolymerization using ultraviolet rays or visible light. Polymerization initiators used for ultraviolet rays or visible light include ones capable of producing a radical upon exposure to ultraviolet rays or visible light. Specific examples thereof include carbonyl compounds such as benzoin or its derivative and benzophenone, an azo compound such as azobisisobutyronitrile, a sulfur compound such as dibenzothiazolyl sulfide, a peroxide such as benzoyl peroxide, a halogen compound such as 2-tribromomethanesulfonyl-pyridine, an onium compound such as a quaternary ammonium salt, a substituted or unsubstituted diphenyliodonium salt or a triphenylphosphonium salt, and a metal $\pi$-complex such as iron arene complex or titanocene complex. In cases when subjected to holographic exposure and a photopolymerization initiator used therein exhibits no absorption with respect to a laser light source used for holographic exposure, a sensitizing dye may be used in combination with the initiator to spectrally sensitize a photopolymerization initiator.

A cationically polymerizable compound used in the transparent organic layer of the invention is preferably chosen from compounds containing an oxirane group, oxetanyl group, a tetrahydrofuran group, oxepane group, a monocyclic acetal group, a bicyclic acetal group, a alkenyl ether group, an allene ether group, ketene acetal group, lactone group, a cyclic orthoester group or a cyclic carbonato group.

Compounds containing oxetanyl group include, for example, those described in Jp-A Nos. 5-170763, 5-371224, 6-16804, 7-17958, 7-173279, 8-245783, 8-301859, 10-237056, 10-330485, 11-106380, 11-130766, 11-228558, 11-246510, 11-246540, 11-246541, 11-322735, 2000-1482, 2000-26546, 2000-191652, 2000-302774, 2000-336133, 2001-31664, 2001-31665, 2001-31666, 2001-40085, 2003-81958, 2003-89693, 2001-163882, 2001-226365, 2001-278874, 2001-278875, 2001-302651, 2001-342194, 2002-20376, 2002-80581, 2002-193965, 2002-241489, 2002-275171, 2002-275172, 2002-322268, 2003-2881, 2003-12662, 2003-81958, 2004-91347, 2004-149486, 2004-262817, 2005-125731, 2005-171122, 2005-238446, 2005-239573, 2005-336349, and Japanese translation of PCT international patent application No. 11-500422. These compounds may be used singly or in combination.

There are usable a variety of compounds containing oxirane group. Specific examples thereof include an aliphatic polyglycidyl ether, polyalkylene glycol diglycidyl ether, a tertiary carboxylic acid monoglycidyl ether, a resin modified with a glycidyl group at the endo-position such as a polycondensate of bisphenol A and epichlorohydrin and a polycondensate of brominated bisphenol A and epichlorohydrin, a glycidyl-modified phenol novolac resin, 3,4-epoxycyclohexenylmethyl-3',4'-epoxycyclohexenecarboxylate, 3,4-epoxy-4-methylcyclohexenylmethyl-3',4'-epoxy-4'-methylcyclohexenecarboxylate, 1,2-bis(3,4-epoxy-4-methylcyclohexenylcarbonyloxy)ethane and dipentene oxide. In addition, there are also usable compounds described in "11290 chemical goods" (Kagakukogyo Nippo-sha) page 778-787, and JP-A 2003-341003. Such compounds containing oxirane group may be used singly or in combination.

Examples of a compound containing an alkenyl ether group include hydroxyethyl vinyl ether, hydroxybutyl vinyl ether, dodecyl vinyl ether, propenyl ether propylene carbonate, and cyclohexyl vinyl ether. Examples of a compound containing at least two vinyl ether groups include cyclohexanedimethanol divinyl ether, triethylene glycol divinyl ether and novolac type divinyl ether. Specific examples of compounds containing tetrahydrofuran group, oxepane group, a monocyclic acetal group, a bicyclic acetal group, a alkenyl ether group, an allene ether group, ketene acetal group, lactone group, a cyclic orthoester group or a cyclic carbonato group include those described in JP-A No. 2004-341016.

Polymerization initiators to polymerize a cationically polymerizable compound include a photopolymerization initiator and a thermal polymerization initiator. Compounds capable of generating a Brønsted cid or a Lewis acid are usable as a photopolymerization initiator. For example, a photo-cationic-polymerization initiator used in a chemical amplification type photoresist or a resin for use in laser beam lithography ("Organic Material used for Imaging" edited by Organic Electronics Material Study Group, Bunshin Shuppan (1993) page 187-192) are appropriately chosen and usable.

Specific examples of a photo-cationic-polymerization initiator include a trihalomethyl group-substituted s-triazine compound such as 2,4,6-tris(trichloromethyl)-1,3,5-triazine, 2-(4-methoxyphenyl)-4,6-bis(trichloromethyl)-1,3,5-triazine and compound described in JP-A No. 2-306247; an iron arene complex such as [η6-I-propylbenzene] or [η5-cyclopentadienyl]iron hexafluorophosphate; an onium salt such as diphenyliodonium hexafluorophosphate, diphenyliodonium hexafluoroantimonate, triphenylsulfonium hexafluorophosphate, triphenyltelluronium hexafluoroarsenatediphenyl-4-thiophenoxysulfonium hexafluoroantimonate; and an aryldiazonium salt described in JP-A No. 62-57646, a diketone, o-nitrobenzyl ester, a sulfonic acid ester, disulfone derivatives, imidosulfonate derivatives and a silanol-aluminum complex; and those described in JP-A Nos. 5-107999, 5-181271, 8-16080, 8-305262, 2000-47552 and 2003-66816, and U.S. Patent No. 5,759,721 and European patent No. 1,029,258 are also appropriately chosen and are usable. Onium salts such as a sulfonium salt, an ammonium salt and a phosphonium salt, and a silanol-aluminum complex are usable as a thermal cation-polymerization initiator. Of these thermal cation-polymerization initiators, if other essential components are stable even when heated at 150 °C or higher, a benzylsulfonium salt described in JP-A Nos. 58-37003 and 63-223002, a trialkylsulfonium salt described in JP-A No. 56-152833 and compounds described in JP-A Nos. 63-8365, 63-8366, 1-83060, 1-290658, 2-1470, 2-196812, 2-232253, 3-17101, 3-47164, 3-48654, 3-145459, 3-200761, 3-237107, 4-1177, 4-210673, 8-188569, 8-188570, 11-29609, 11-255739 and 2001-55374 are also usable as a thermal cation-polymerization initiator. These cationic-polymerization initiators can be use singly or in combination.

The foregoing initiator is used preferably in an amount of 0.01 to 30 parts by mass, and more preferably 0.05 to 20 parts by weight per 100 parts by weight of a cationically polymerizable compound.

An anionically polymerizable compound used in the transparent organic layer is appropriately chosen from commonly known anionically polymerizable compounds. Such compounds include a compound containing an electron-acceptable, ethylenically unsaturated bond and a compound containing an oxirane group or an oxetanyl group. Specific examples thereof include those cited in the foregoing radically polymerizable compounds and cationically polymerizable compounds.

Polymerization initiators to initiate polymerization of anionically polymerizable compounds include, for example, a base-generating agent capable of generating a Brønsted base or Lewis base upon exposure to light or heat to initiate polymerization. Such compounds include those described in JP-A Nos. 59-168441, 59-180537, 60-237443, 61-51139, 1-68746, 4-134348, 4-162040, 5-27440, 8-169870, 8-227154, 10-83079, 11-71450, 11-269138, 2000-10270, 2001-200049, 2002-297006, 2003-20339, 2003-212856 and 2005-17354; Japanese translation of PCT international patent application No. 2005-536620; U.S. Patent Nos. 3,493,374 and 4,060,420; British patent No. 998949; International Patent 2002/051905; and Encyclopedia of Polymer Science and Engineering, John Wiley & Sons Ltd. (1985) vol. 1 page 740. These anionic-polymerization initiators may be used singly or in combination.

In addition to the foregoing polymerization initiators, a proliferation agent for proliferating a base formed from a base generating agent and a sensitizer used when generating a base by light are also appropriately employed, as described in JP-A Nos. 2000-330270, 2002-265531 and 2004-250650.

A polymerization initiator, as described above is used preferably in an amount of 0.01 to 30 parts by mass per 100 parts by mass of an anionically polymerizable compound, and more preferably 0.05 to 20 parts by mass.

Combinations of compounds having a functional group capable of copolymerization, used in the transparent organic layer of the invention include a combination of a compound containing an isocyanate group and a compound containing a hydroxyl group of an amino group, a combination of a compound containing an oxirane group and a compound containing an amino group or a mercapto group, and a combination of a compound containing an oxazoline group and a compound containing a carboxy group or a hydroxyl group. These are chosen according to heat resistance of a substrate sheet when undergoing copolymerization. In addition to the foregoing essential components, a catalyst may be added to promote polymerization.

The thickness of the transparent organic layer according to the invention is preferably not less than 50 nm and not more than 5.0 $\mu$m for reduction the surface area, achievement of barrier capability and prevention of deformation of the substrate sheet and more preferably not less than 50 nm and not more than 2.0 $\mu$m.

When the combination of a transparent inorganic layer and a transparent organic layer forms one unit, there are provided preferably at least two units, more preferably from two to 10 units, and still more preferably from two to five units on a primer layer provided on the substrate sheet.

When plural units are provided and abrasion resistance is taken into account, it is preferred to render the outermost transparent organic layer more thicker than an inner transparent organic layer. In that case, the following relationship is preferably met:

$$1 < R2/R1 \leq 10$$

where R1 is a thickness of the inner transparent organic layer and R2 is a thickness of the outermost transparent organic layer. In the foregoing, the thickness of an transparent inorganic layer is preferably from 10 to 1,000 nm and more preferably from 20 to 500 nm and that of an inner organic layer is preferably from 50 to 2.0 $\mu$m and more preferably from 50 to 1.0 $\mu$m.

In addition to the essential layers described above, there may be provided an antistatic layer, an adhesive layer, a electrically conductive layer, an antihalation layer, an ultraviolet absorbing layer, a near-infrared absorbing layer, and the like. These layers are provided at a position according to the use thereof.

Preparation of transparent barrier sheet

The transparent barrier sheet according to the invention is prepare so that at least one transparent inorganic layer and at least one transparent organic layer is provided on one side of a substrate sheet, in which the surface of the outermost layer of the layer side exhibits a surface roughness Ra of not more than 5 nm and the foregoing formula (1) is met.

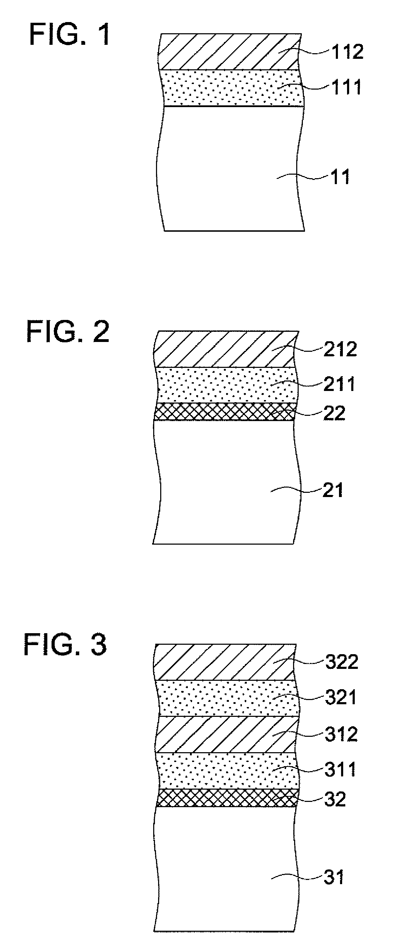

FIG. 1 through FIG. 5 each illustrate a sectional view of a transparent barrier sheet of the invention, but the invention is not limited to these.

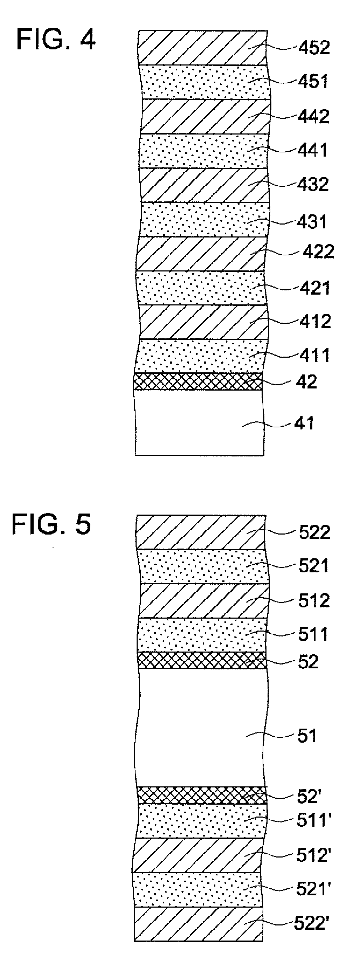

In FIG. 1, transparent inorganic layer 111 and transparent organic layer 112 are provided in that order on substrate sheet 11. In FIG. 2, primer layer 22, transparent inorganic layer 211 and transparent organic layer 212 are provided in that order on substrate sheet 21. In FIG. 3, two units of transparent inorganic layer 311 and transparent organic layer 312, and transparent inorganic layer 321 and transparent organic layer 322 are provided on substrate sheet 31 provided with primer layer 32. In FIG. 4, five units of transparent inorganic layers 411 and transparent organic layer 412, transparent inorganic layer 421 and transparent organic layer 422, transparent inorganic layer 431 and transparent organic layer 432, transparent inorganic layer 441 and transparent organic layer 442, and transparent inorganic layer 451 and transparent organic layer 452 are provided on substrate sheet 41 provided with primer layer 42. In Fig. 5, transparent primer layers 52 and 52' are provided on both sides of substrate sheet 51, and there are provided two units of transparent inorganic layer 511 and transparent organic layer 512, and transparent inorganic layer 521 and transparent organic layer 522 on one side of the substrate sheet, and two units of a transparent inorganic layer 511' and a transparent organic layer 512', and a transparent inorganic layer 521' and a transparent organic layer 522' on the other side. In the foregoing FIGS 1-5, the surface roughness Ra of the outermost layer is not more than 5 nm, the thickness of the transparent inorganic layer falls within the range of 20 nm to 500 nm, and the thickness of the inorganic and organic layers meets the afore-mentioned equation (1).

The afore-mentioned constituent of a primer layer are mixed or are dissolved or dispersed in a solvent to prepare a composition of a primer layer.

In the stage of preparing a coating solution, dispersion is conducted using conventional dispersing machines, such as a two-roll mill, a three-roll mill, a ball mill, a pebble mill, a cobol mill, a trone mill, a sand mill, a sand grinder, a Sqegvari atreiter, a high-speed impeller dispersing machine, a high-speed stone mill, a high-speed impact mill, a disper, a high-speed mixer, a homogenizer, a ultrasonic dispersing machine, an open kneader, and a continuous kneader.

Examples of solvents used for solution include water, ketones such as methyl ethyl ketone, methyl isobutyl ketone and cyclohexanone; alcohols such as ethyl alcohol, n-propyl alcohol, and isopropyl alcohol; aliphatic hydrocarbons such as heptane and cyclohexane; aromatic hydrocarbons such as toluene and xylene; glycols such ethylene glycol diethylene glycol; ether-alcohols such as ethylene glycol monomethyl ether; ethers such as tetrahydrofuran, 1,3-dioxoran and 1,4-dioxane; and halogen-containing solvents such as dichloromethane and chloroform.

The thus prepared composition of a transparent primer layer is coated by conventional methods such as a roll coating method, a direct gravure coating method, an air doctor coating method, a rod coating method, kiss-roll coating method, a squeeze coating method, a reverse roll coating method, a curtain flow coating method, a fountain method, a transfer coating method, a spray coating method, a dip coating method or other coating methods. Subsequently, heat-drying and optionally, an aging treatment are conducted to provide a transparent primer on a substrate sheet.

When using transparent primer layer constituents which are the same as constituents of a transparent organic layer, there may be employed methods used in the transparent organic layer.

Next, there will be described a method of forming a transparent inorganic layer which is provided on the substrate sheet or on the primer layer, and is mainly composed of a metal oxide or a metal nitride.

A transparent inorganic layer which is mainly composed of a metal oxide or a metal nitride can be provided by film formation through a vacuum vapor deposition method, a sputtering method, a ion plating method, a reaction type plasma vapor deposition, an electron cyclotron resonance plasma method, a plasma chemical gas phase growth method, a thermo-chemical gas phase growth method, a photochemical gas phase growth method, a catalytic chemical vapor deposition method or a vacuum ultraviolet chemical gas phase growth method. Of the foregoing methods, film formation is performed preferably by a catalytic chemical vapor deposition method (cat-CVD method), a reaction plasma deposition method (RPD method) or an electron cyclotron resonance (ECR) plasma deposition method, whereby the surface with reduced ruggedness and superior smoothness is achieved. Further, a RPD method or an ECR plasma method is more preferred, whereby smoothness of the formed surface is achieved.

The catalytic chemical vapor deposition method can be conducted by using methods or film forming apparatuses described in, for example, JP-A Nos. 2002-69644, 2002-69646, 2002-299259, 2004-211160, 2004-217966, 2004-292877, 2004-315899 and 2005-179693. The reaction type plasma vapor deposition method can also be conducted by using methods or film forming apparatuses described in, for example, JP-A Nos, 2001-262323, 2001-295031, 2001-348660, 2001-348662, 2002-30426, 2002-53950, 2002-60929, 2002-115049, 2002-180240, 2002-217131, 2002-249871, 2002-294436, 2003-105526, 2004-76025 and 2005-34831. The ECR plasma method can also be conducted by using methods or film forming apparatuses described in, for example, T. Asamaki "Usumaku Sakusei no Kiso (Fundamentals of Layer Formation)" third ed., pages 152-154 and 226 (Nikkan Kogyo Shinbun, 1996 March), and JP-A Nos. 3-197682, 4-216628, 4-257224, 4-311036, 5-70955, 5-90247, 5-9742, 5-117867, 5-129281, 5-171435, 6-244175, 6-280000, 7-263359, 7-335575, 8-78333, 9-17598, 2003-129236, 2003-303698, and 2005-307222.

A transparent organic layer can be provided on the foregoing transparent inorganic layer by coating methods used in formation of a transparent primer layer, as afore-mentioned or by vapor deposition methods, but in order to avoid damage to a transparent inorganic layer which functions as a barrier layer in the transparent barrier sheet of the invention, the vapor deposition method is preferably used.

A transparent organic layer can be provided by a vapor deposition method in such a manner that constituents forming the organic layer are deposited and then polymerized to form a polymer layer. Specifically, a layer which contains at least one selected from radically polymerizable compounds, cationically polymerizable compounds, anionically polymerizable compounds and copolymerizable compounds having a functional group capable of copolymerizing, and indispensable components necessary to polymerize the polymerizable compound, is formed through vapor deposition and after being smoothed by leveling, the surface is exposed to actinic rays such as an electron beam or ultraviolet rays, or is heated under conditions not causing deformation of the substrate sheet to allow polymerization of the polymerizable compound to form a thin polymeric layer.

Specific methods of vapor deposition and apparatuses used therein are described in, for example, JP-A Nos. 2-284485, 5-125520, 5-177163, 5-311399, 5-339389, 6-116409, 6-316757, 7-26023, 7-209863, 9-31115, 9-104085, 9-143681, 9-249851, 9-272703, 9-278805, 9-279332, 9-326389, 10-92800, 10-168559, 10-289902, 11-172418, 2000-87224, 2000-122005, 2000-127186, 2000-216049, 2000-348971, 2001-261867, 2002-275619, 2003-3250, 2003-172935, 2003-233076, 2003-276115, 2003-300273, 2003-322859, 2003-335880, 2003-341003, 2004-1296, 2004-359899, 2004-103401, 2005-14483, 2005-125731, and 2005-178010; Japanese translation of PCT international patent application Nos. 8-503099, 8-512256, 11-503195, 2001-508089, 2001-518561, 2002-528568, 2004-524958, 2004-532330, 2004-533313, 2005-524058, and 8-503099. The method or apparatuses used in the invention can be chosen from those described above can also appropriately be modified so as to fit an object of the invention.

In order to prevent thermal deformation of a substrate sheet in the process of preparing the transparent barrier sheet of the invention, the maximum temperature (T) of the substrate sheet preferably falls within the range from 243K to 383K and more preferably from 243K to 333K. Further, the maximum temperature (T) preferably meets the following formula (4):

$$0.46 \leq T/Tg \leq 0.98 \qquad\qquad (4)$$

where T is the maximum temperature of the substrate sheet and Tg is the glass transition temperature of a resin used in the substrate sheet.

When a roll of film is used as a substrate sheet in the preparation of a transparent barrier sheet, a transparent inorganic layer and a transparent organic layer is provided, while conveying the substrate sheet film with applying a tension between the winding and unwinding sides. In that case, thermal deformation of the substrate sheet is often greater than in a single sheet form so that it is preferable to satisfy the following equation (3), in which T represents the maximum temperature of a substrate sheet during preparation of a transparent barrier sheet and S represents a deposition time, which is the time (sec.) required to form a single layer of a transparent inorganic layer or a transparent organic layer through deposition. It is more preferable to satisfy the following equation (5), whereby transparent barrier sheets with fewer defects can be prepared. In cases when plural sets of a transparent inorganic layer and a transparent organic layer are provided, the requirement is satisfied by a single layer of a single layer of an inorganic layer or an organic layer. The deposition time represents the time for forming an inorganic layer or an organic layer at a certain point on the substrate sheet.

$$1.21 \leq (T \times S)/1000 \leq 460 \quad (K \cdot sec) \qquad (3)$$

$$1.21 \leq (T \times S)/1000 \leq 350 \quad (K \cdot sec) \qquad (5)$$

When a transparent primer layer, a transparent inorganic layer and a transparent organic layer are each provided, to enhance adhesion between layers, the layer surface may be subjected to a surface treatment selected from a flame treatment, an ozone treatment, a glow discharge treatment, a corona discharge treatment, a plasma treatment, a vacuum ultraviolet ray exposure treatment, an electron beam exposure treatment and a radiation exposure treatment.

In addition of the essential layer of the transparent barrier sheet of the invention, there may optionally be provided an antistatic layer, an adhesive layer, a conductive layer, an antihalation layer, an ultraviolet absorbing layer or a near-infrared absorbing layer. These layers can be provided similarly to the transparent primer layer, the transparent inorganic layer and the transparent organic layer.

## EXAMPLES

The transparent barrier sheet of the invention will be further described with reference to examples, but the invention is not limited to these. Unless otherwise noted, the unit "part(s)" represents part(s) by weight.

Example 1

A 100 $\mu$m thick polyether sulfone film (Sumilight FS-530, produced by Sumitomo Bakelight Co., Ltd.) was prepared as a substrate sheet. One side of the sheet was subjected to a corona discharge treatment and further thereon, a coating composition composed of 98 parts of methyl ether and 2 parts of diphenyl-4-thiophenoxysulfonium hexafluoroantimonate as an initiator was coated at a coating thickness of 0.5 $\mu$m. Then, using an ultraviolet exposure apparatus (a conveyer-fitted UV curing apparatus, produced by Iwasaki Denki) the coated surface was exposed to ultraviolet rays in an atmosphere at a sufficient dose to react the composition and cured to form a transparent primer layer. The surface of the transparent primer layer was measured at five sites within an area 200 $\mu$m x 200 $\mu$m by using a noncontact 3D surface measuring apparatus (WYKO NT1100, produced by Veeco). Surface roughness (Ra) was analyzed using a self-contained surface analysis software. Average surface roughness Ra was determined to be 4.5 nm.

The back surface of the thus prepared substrate sheet having a transparent primer layer was brought into contact with a 10 °C cooling plate. Using a reaction type plasma deposition system (produced by Sumitomo Juki, a compact plasma film-forming apparatus: 370x480 mm correspondence), vapor deposition was conducted using silicon as a solid target under conditions of a discharge current of 120 A and a pressure of 0.1 Pa in an atmosphere of argon: acid = 1:5 to form a 200 nm thick transparent inorganic layer comprised of a silicon oxide layer on the transparent primer layer. The deposition time and the maximum temperature (T) of the substrate sheet in the deposition process are shown in Table 1. The maximum temperature (T) was determined in such a manner that a thermo-label was attached to the layer surface and the temperature was confirmed after layer formation.

The substrate sheet provided with a transparent primer layer and further thereon a transparent inorganic layer was set into a vacuum vessel, while the back surface of the substrate sheet being in contact with a 10 °C cooling plate. The inside of the vessel was evacuated to $10^{-4}$ Pa. A composition to form a transparent organic layer was prepared, which was composed of 80 parts of 3,4-epoxycyclohexenylmethyl-3'4'-epoxycyclohexenecarboxylate, 18 parts of 1,4-butanediol glycidyl ether and 2 parts of diallyliodonium hexafluoroantimonate. This composition was introduced into an organic vapor deposition source. Resistance heating was started and when evaporation of impurities was completed, the deposition shutter was opened to allow deposition of an organic layer. Subsequently, the deposited organic layer was exposed to ultraviolet rays at an integrate exposure amount of 500 mJ/cm$^2$ to form a transparent organic layer. Transparent barrier sheets 1-A through 1-E were thus prepared.

The surface roughness Ra, thickness and the deposition time of the obtained transparent organic layer and the maximum temperature (T) of the substrate sheet in the layer-forming process are shown in Table 1. The maximum temperature (T) was determined in such a manner that a thermo-label was attached to the layer surface and the temperature was confirmed after layer formation.

Evaluation of water vapor barrier capability

The prepared transparent barrier sheets were each measured in an atmosphere at a temperature of 40 °C and a humidity of 90% RH using a water vapor permeability measurement apparatus (OXTRAN 2/21, produced by MOCON Co.). The results thereof are shown in Table 1.

Evaluation of oxygen barrier capability

The transparent barrier sheets were measured with respect to oxygen permeability at 40 °C and 0% RH using an oxygen permeability measurement apparatus (PERMATRAN-W 3/32, produced by MOCON Co.). The results thereof are shown in Table 1.

Evaluation of bending resistance

After bending each of the transparent barrier sheets 20 times at an angle of 180° along a 20 mm φ stainless steel bar with the layer surface outward turned was repeated 20 times, each sheet was evaluated similarly to the evaluation of water vapor barrier capability.

Comparative transparent barrier sheets R-1A and R-1B, in which the ratio of organic layer to inorganic layer fell outside of the range of the invention were also prepared and evaluated similarly. The results thereof are shown in Table 1.

Table 1

| Barrier Sheet No. | Tg[*1] (K) | Transparent Inorganic Layer | | | | Transparent Organic Layer | | | | | d2/d1 | Gas Barrier Capability | | Bending Resistance (*3) | Remark |
|---|---|---|---|---|---|---|---|---|---|---|---|---|---|---|---|
| | | Thickness d1 (nm) | T[*2] (K) | Deposition Time S (sec) | ** | Thickness d2 (nm) | Surface Roughness (nm) | T[*2] (K) | Deposition Time S (sec) | ** | | Water Vapor Permeability (*3) | Oxygen Permeability (*4) | | |
| 1-A | 496 | 200 | 288 | 60 | 17.3 | 100 | 4.5 | 288 | 75 | 21.6 | 0.5 | <0.01 | <0.01 | 0.04 | Inv. |
| 1-B | 496 | 200 | 288 | 60 | 17.3 | 200 | 4.5 | 288 | 140 | 40.3 | 1.0 | <0.01 | <0.01 | 0.03 | Inv. |
| 1-C | 496 | 200 | 298 | 60 | 17.3 | 600 | 3.5 | 298 | 425 | 127 | 3.0 | <0.01 | <0.01 | 0.03 | Inv. |
| 1-D | 496 | 200 | 303 | 60 | 17.3 | 1000 | 5.0 | 303 | 710 | 215 | 5.0 | <0.01 | <0.01 | 0.04 | Inv. |
| 1-E | 496 | 200 | 308 | 60 | 17.3 | 2000 | 4.0 | 308 | 1420 | 437 | 10.0 | <0.01 | <0.01 | 0.06 | Inv. |
| R-1A | 496 | 200 | 288 | 60 | 17.3 | 50 | 3.5 | 288 | 40 | 11.5 | 0.25 | <0.01 | <0.01 | 0.07 | Comp. |
| R-1B | 496 | 200 | 313 | 60 | 20.0 | 3000 | 4.0 | 313 | 2130 | 667 | 15.0 | <0.01 | <0.01 | 0.11 | Comp. |

*1: Glass transition point of substrate sheet
*2: Maximum temperature
*3: $g/m^2 \cdot 24hr \cdot 40°C \cdot 90\%RH$
*4: $ml/m^2 \cdot 24hr \cdot 40°C \cdot 0\%RH$
**: Txs/1000 (K·sec)

As is apparent from Table 1, it was proved that transparent barrier sheets of the invention exhibited superior barrier capability with respect to water vapor and oxygen gas and were also superior in bending resistance.

Example 2

A substrate sheet provided with transparent primer layers on both sides was prepared. On both sides of a 125 μm thick biaxially stretched polyethylene terephthalate film (Cosmoshine A-4300, produced by Toyobo) was coated with the same coating composition as used in Example 1 and exposed to ultraviolet rays to be cured to form a 0.3 μm thick transparent primer layer. The surface of the transparent primer layer was measured at five sites by using a noncontact 3D surface measuring apparatus (WYKO NT1100, produced by Veeco) and the average surface roughness (Ra) was 3.5 nm.

Then, transparent barrier sheets of the invention, 2-A through 2-E were prepared in the manners 1) and 2) described below. The thus prepared transparent barrier sheets were evaluated with respect to barrier capability and bending resistance similarly to Example 1. Results obtained are shown in Table 2.

1) Formation of inorganic layer:

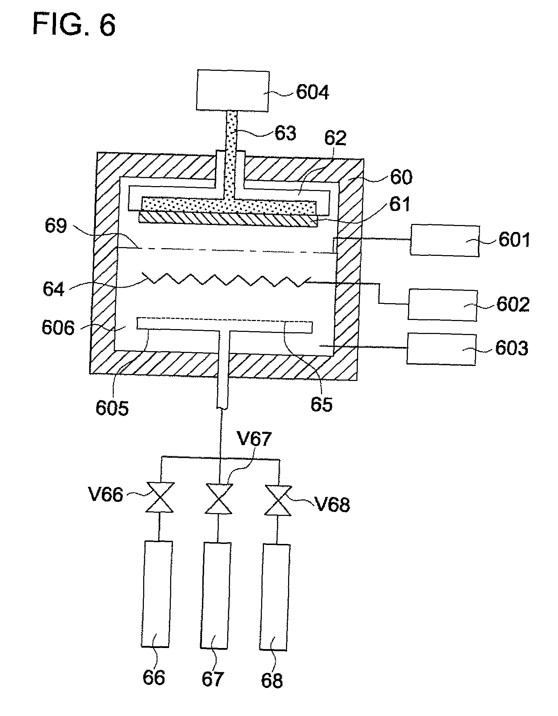

Using a film deposition apparatus according to the process of catalytic chemical vapor deposition, as shown in FIG. 6, the foregoing substrate sheet provided with a transparent primer layer (61) was brought into close contact with a holding mechanism 62 as a substrate holder and introduced into a vacuum vessel 60. The interior of the vacuum vessel 60 was evacuated to $2 \times 10^{-4}$ Pa or less by an evacuation pump 603 and then, holding mechanism 62 as a substrate holder was cooled to 0 °C, in which the numbers 63 and 604 designate a cooling mechanism and a cooling source. Subsequently, a gate valve V66 of hydrogen gas source 66 and a gate valve V67 of ammonia gas source 67 were opened to introduce hydrogen gas and ammonia gas, respectively. To promote degradation of the introduced gases, a tungsten linear-form heating body 64 which was disposed between a gas inlet 65 and the substrate sheet 61 was heated to 1800 °C.

Subsequently, a shielding member 69 disposed between the heating body 64 and the substrate sheet 61 was opened to expose the surface of the substrate sheet 61 to activated degradation species of hydrogen gas and ammonia gas over a period of 20 sec. Thereafter, the shielding member 69 was closed, while maintaining the heating body 64 at 1800 °C. Further, a gate valve 68V of a silane gas source 68 was opened to introduce silane gas and then, the shielding member 69 was again opened to deposit a 60 nm thick silicon nitride layer on the substrate sheet 61 provided with a primer layer. The number 601 designates a shielding member-driving means, the number 602 designates a power source for the heating body, the numeral 605 designates introducing means and the number 606 designates space.

2) Formation of organic layer:

The substrate sheet having a transparent inorganic layer on the primer layer was introduced into a vacuum vessel, while the back surface of the substrate sheet was brought into contact with a 10 °C cooling plate. There was prepared a composition composed of 97 parts of bi-functional, neopentyl glycol-modified trimethylol propane diacrylate (Kayarad R-604, produced by Nippon Kayaku) and 3 parts of 2-methyl-[4-(methylthio)phenyl]-2-morpholino-1-propane. After evacuating the inside of the vessel to a level of $10^{-4}$ Pa, the foregoing composition was introduced in an organic deposition source. Resistance heating was started and when evaporation of impurities was completed, a deposition shutter was opened to allow deposition to form a transparent organic layer. Then the deposited layer was exposed to ultraviolet rays at an integrated exposure of 500 mJ/cm$^2$ to form a transparent organic layer. The surface roughness Ra and the thickness of the thus obtained transparent organic layer, the deposition time and the maximum temperature (T, expressed in K) of the substrate sheet during deposition are shown in Table 2. The maximum temperature (T) was determined in the same manner as in Example 1.

Comparative transparent barrier sheets R-2A and R-2B in which the ratio of organic layer to inorganic layer fell outside of the range of the invention were also prepared and evaluated similarly. The results thereof are shown in Table 2.

Table 2

| Barrier Sheet No. | Tg*1 (K) | Transparent Inorganic Layer | | | | Transparent Organic Layer | | | | |
|---|---|---|---|---|---|---|---|---|---|---|
| | | Thickness d1 (nm) | T*2 (K) | Deposition Time S (sec) | TxS/1000 (K·sec) | Thickness d2 (nm) | Surface Roughness Ra (nm) | T*2 (K) | Deposition Time S (sec) | TxS/1000 (K·sec) |
| 2-A | 340 | 60 | 298 | 900 | 268 | 60 | 3.5 | 298 | 45 | 21.6 |
| 2-B | 340 | 60 | 298 | 900 | 268 | 60 | 3.5 | 298 | 45 | 40.3 |
| 2-C | 340 | 60 | 298 | 900 | 268 | 150 | 3.0 | 298 | 112.5 | 127 |
| 2-D | 340 | 60 | 298 | 900 | 268 | 300 | 4.5 | 298 | 225 | 215 |
| 2-E | 340 | 60 | 298 | 900 | 268 | 600 | 4.0 | 298 | 450 | 437 |
| R-2A | 340 | 60 | 298 | 900 | 268 | 15 | 2.5 | 288 | 11.25 | 11.5 |
| R-2B | 340 | 60 | 298 | 900 | 268 | 800 | 3.5 | 293 | 600 | 667 |

*1: Glass transition point of Substrate Sheet
*2: Maximum temperature
*3: $g/m^2 \cdot 24hr \cdot 40°C \cdot 90\%RH$
*4: $ml/m^2 \cdot 24hr \cdot 40°C \cdot 0\%RH$

Table 2(Cont'd)

| Barrier Sheet No. | Deposition Frequency (times) | d2/d1 | Gas Barrier Capability | | Bending Resistance (*3) | Remark |
|---|---|---|---|---|---|---|
| | | | Water Vapor Permeability (*3) | Oxygen Permeability (*4) | | |
| 2-A | 1 | 1.0 | <0.01 | 0.02 | 0.03 | Inv. |
| 2-B | 2 | 1.0 | <0.01 | 0.02 | 0.02 | Inv. |
| 2-C | 1 | 2.5 | <0.01 | 0.02 | 0.02 | Inv. |
| 2-D | 1 | 5.0 | <0.01 | 0.02 | 0.03 | Inv. |
| 2-E | 1 | 10.0 | <0.01 | 0.02 | 0.05 | Inv. |
| R-2A | 1 | 0.25 | <0.01 | 0.02 | 0.07 | Comp. |
| R-2B | 1 | 13.3 | <0.01 | 0.02 | 0.09 | Comp. |

*1: Glass transition point of Substrate Sheet
*2: Maximum temperature
*3: g/m²·24hr·40°C·90%RH
*4: mL/m²·24hr·40°C·0%RH

As apparent from Table 2, it was proved that transparent barrier sheets of the invention exhibited superior barrier capability with respect to water vapor and oxygen gas and were also superior in bending resistance.

Example 3

One side of a 100 $\mu$m thick biaxially stretched polyethylene terephthalate film (Teonex Q65, produced by Teijin) was subjected to a corona discharge treatment to prepare a substrate sheet. The substrate sheet was placed into a vacuum vessel and the inside of the vessel was evacuated to a level of $10^{-4}$ Pa, and 1,4-butanediol glycidyl ether and 1,3-diaminopropane (produced by Tokyo Kasei) were each introduced as separate deposition sources and flash heating was started. After completing evaporation of impurities, a deposition shutter was opened to allow deposition and polymerization on the substrate sheet to form a transparent primer layer C. The surface of the transparent primer layer was measured at five sites by using a noncontact 3D surface measurement apparatus (WYKO NT1100, produced by Veeco) and the surface roughness (Ra) was 2.0 nm.

Subsequently, a transparent inorganic layer A, as described in 3) below and a transparent organic layer B, as described in 4) below were each formed in the form as shown in Table 3 on the primer layer of the substrate sheet to prepare transparent barrier sheets 3-A through 3-G of the invention.

3) Formation of inorganic layer A:

While the back surface of the substrate sheet was in contact with a cooling plate of 10 °C, a transparent inorganic layer comprised of silicon oxynitride was formed by ECR plasma deposition system (Aftec ER-1200, produced by N.T.T. AFTI Co., Ltd.) using silicon as a solid target under deposition conditions of a microwave power of 500 W, a RF power of 500 W and a deposition pressure of 0.09 Pa and under gas-introducing conditions of an argon flow rate of 40 sccm and a mixed gas (nitrogen/oxygen=8/2) flow rate of 0.5 sccm. The layer thickness of a transparent inorganic layer, the deposition time thereof and the maximum temperature (T °K) of the substrate sheet during deposition are each shown in Table 3. It was proved through X-ray photoelectron spectroscopy (XPS) that the thus obtained transparent inorganic layer exhibited a composition ratio of Si:O:N = 1.00:0.18:1.21. The maximum temperature (T, expressed in K) was determined similarly to Example 1.

4) Formation of organic layer B:

The substrate sheet was placed into a vacuum vessel while the back surface of the substrate sheet being in contact with a cooling plate of 10 °C and the inside of the vessel was evacuated to a level of $10^{-4}$ Pa. A mixture of 80 parts of 3,4-epoxycyclohexenylmethyl-3',4'-epoxycyclohexenecarboxylate, 18 parts of 1,4-butanediol glycidyl ether and 2 parts of hexafluoroantimonic acid diallyliodonium was prepared as a composition to form a transparent organic layer. This composition was introduced into an organic deposition source and resistance heating was started. When completing evaporation of impurities, a deposition shutter was opened to perform deposition to form an organic layer. Thereafter, the organic layer was exposed to ultraviolet rays at an integrated exposure of 500 mJ/cm$^2$ to form a transparent organic layer. The thickness and deposition time of the transparent organic layer, the surface roughness Ra of the outermost layer and the maximum temperature (T °K) of the substrate sheet during deposition are each shown in Table 3. The maximum temperature T (expressed in K) was determined similarly to Example 1.

Similarly to Example 1, the transparent barrier sheets were evaluated with respect to barrier capability and bending resistance. The obtained results are shown in Table 3.

Further, comparative sample R-3 in which the ratio of organic layer to inorganic layer was outside of the scope of the invention was prepared and evaluated similarly. Results thereof are also shown in Table 3

Table 3

| Barrier Sheet No. | Tg*[1] (K) | Transparent Inorganic Layer A | | | | Transparent Organic Layer B | | | |
|---|---|---|---|---|---|---|---|---|---|
| | | Thickness d1 (nm) | T*[2] (K) | Deposition Time S (sec) | TxS/1000 (K·sec) | Thickness d2 (nm) | T*[2] (K) | Deposition Time S (sec) | TxS/1000 (K·sec) |
| 3-A | 340 | 40 | 288 | 480 | 138 | 50 | 288 | 40 | 11.5 |
| 3-B | 340 | 60 | 288 | 720 | 207 | 100 | 288 | 75 | 21.6 |
| 3-C | 340 | 60 | 288 | 720 | 207 | 100 | 288 | 75 | 21.6 |
| 3-D | 340 | 60 | 288 | 720 | 207 | 100 | 288 | 75 | 21.6 |
| 3-E | 340 | 60 | 288 | 720 | 207 | 200 | 288 | 140 | 40.3 |
| 3-F | 340 | 60 | 288 | 720 | 207 | 600 | 298 | 425 | 127 |
| 3-G | 340 | 100 | 293 | 1200 | 355 | 200 | 288 | 140 | 40.3 |
| R-3 | 340 | 60 | 288 | 720 | 207 | 800 | 303 | 710 | 215 |

*1: Glass transition point of Substrate Sheet
*2: Maximum temperature
*3: $g/m^2 \cdot 24hr \cdot 40°C \cdot 90\%RH$
*4: $ml/m^2 \cdot 24hr \cdot 40°C \cdot 0\%RH$
*5:C/A/B, *6:C/A/B/A/B, *7:C/A/B/A

Table 3(Cont'd)

| Barrier Sheet No. | Surface Roughness of Outermost Layer Ra (nm) | d2/d1 | Deposition Form | Gas Barrier Capability | | Bending Resistance (*3) | Remark |
|---|---|---|---|---|---|---|---|
| | | | | Water Vapor Permeability (*3) | Oxygen Permeability (*4) | | |
| 3-A | 2.0 | 1.25 | *5 | <0.01 | <0.01 | 0.02 | Inv. |
| 3-B | 3.5 | 1.67 | *5 | <0.01 | <0.01 | 0.02 | Inv. |
| 3-C | 2.5 | 1.67 | *6 | <0.01 | <0.01 | <0.01 | Inv. |
| 3-D | 4.0 | 1.67 | *7 | <0.01 | <0.01 | <0.01 | Inv. |
| 3-E | 3.5 | 3.33 | *5 | <0.01 | <0.01 | 0.02 | Inv. |
| 3-F | 3.0 | 10.0 | *5 | <0.01 | <0.01 | 0.04 | Inv. |
| 3-G | 2.5 | 3.33 | *5 | <0.01 | <0.01 | 0.04 | Inv. |
| R-3 | 3.0 | 13.3 | *5 | <0.01 | <0.01 | 0.08 | Comp. |

*1: Glass transition point of Substrate Sheet
*2: Maximum temperature
*3: g/m$^2$·24hr·40°C·90%RH
*4: ml/m$^2$·24hr·40°C·0%RH
*5:C/A/B, *6:C/A/B/A/B, *7:C/A/B/A

As apparent from Table 3, it was proved that transparent barrier sheets of the invention exhibited superior barrier capability with respect to water vapor and oxygen gas and were also superior in bending resistance.

**Claims**

1. A transparent barrier sheet comprising on one side of a substrate sheet at least one transparent inorganic layer and at least one transparent organic layer, wherein an outermost layer of the inorganic layer and the organic layer exhibits a surface roughness Ra of not more than 5 nm and the transparent inorganic layer exhibits a thickness of not less than 20 nm and not more than 500 nm, and the transparent barrier sheet satisfying the following requirement (1):

$$0.5 \leq d2/d1 \leq 10 \qquad\qquad (1)$$

   wherein d1 is a thickness of the transparent inorganic layer and d2 is a thickness of the transparent organic layer.

2. The transparent barrier sheet as claimed in claim 1, wherein the transparent barrier sheet satisfies the following requirement (2):

$$1.0 \leq d2/d1 \leq 5.0 \qquad\qquad (2)$$

3. The transparent barrier sheet as claimed in claim 1 or 2, wherein the transparent organic layer exhibits a thickness of 50 nm to 2.0 $\mu$m.

4. The transparent barrier sheet as claimed in any one of claims 1 to 3, wherein on the substrate sheet, the inorganic layer and the transparent organic layer are provided in that order.

5. The transparent barrier sheet as claimed in claim 4, wherein a transparent primer layer comprising an organic compound is provided between the substrate sheet and the transparent inorganic layer.

6. The transparent barrier sheet as claimed in claim 4 or 5, wherein at least two of a unit comprising a transparent inorganic layer and a transparent organic layer are provided on the substrate sheet.

7. The transparent barrier sheet as claimed in any one of claims 1 to 6, wherein the transparent inorganic layer comprises a metal oxide or a metal nitride.

8. The transparent barrier sheet as claimed in claim 7, wherein the metal oxide or the metal nitride mainly comprises a compound selected from a silicon oxide, an aluminum oxide, a silicon nitride and a silicon oxynitride.

9. The transparent barrier sheet as claimed in any one of claims 1 to 8, wherein the transparent organic layer comprises a compound formed of a polymerizable compound selected from a radically polymerizable compound, a cationically polymerizable compound, an anionically polymerizable compound and a compound containing a copolymerizable functional group.

10. A method of preparing a transparent barrier sheet as claimed in any one of claims 1 to 9, the method comprising forming a transparent inorganic transparent layer and a transparent organic transparent layer on a substrate, wherein a maximum temperature of the substrate sheet in forming the transparent inorganic transparent layer and the transparent organic transparent layer falls within a range of 243 K to 383 K.

11. A method of preparing a transparent barrier sheet as claimed in any one of claims 1 to 9, the method comprising forming a transparent inorganic layer and a transparent organic layer on a substrate, wherein the following requirement (3) is satisfied:

$$1.21 \leq (T \times S)/1000 \leq 460 \ [K \cdot sec] \qquad\qquad (3)$$

wherein T is the maximum temperature of the substrate in forming the transparent inorganic layer and the transparent organic layer and S is a time to form the transparent inorganic layer or the transparent organic layer.

FIG. 1

112
111
11

FIG. 2

212
211
22
21

FIG. 3

322
321
312
311
32
31

FIG. 4

452
451
442
441
432
431
422
421
412
411
42
41

FIG. 5

522
521
512
511
52

51

52'
511'
512'
521'
522'

## FIG. 6

## INTERNATIONAL SEARCH REPORT

| | International application No. |
|---|---|
| | PCT/JP2007/054271 |

A.   CLASSIFICATION OF SUBJECT MATTER
*B32B9/00*(2006.01)i, *B65D65/40*(2006.01)i, *B65D81/24*(2006.01)i, *C23C14/06* (2006.01)i

According to International Patent Classification (IPC) or to both national classification and IPC

B.   FIELDS SEARCHED

Minimum documentation searched (classification system followed by classification symbols)
B32B1/00-43/00, B65D65/40, B65D81/24, C23C14/06

Documentation searched other than minimum documentation to the extent that such documents are included in the fields searched
Jitsuyo Shinan Koho        1922-1996    Jitsuyo Shinan Toroku Koho    1996-2007
Kokai Jitsuyo Shinan Koho    1971-2007    Toroku Jitsuyo Shinan Koho    1994-2007

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
|---|---|---|
| X<br>Y | JP 2005-178137 A  (Dainippon Printing Co., Ltd.),<br>07 July, 2005 (07.07.05),<br>Claims; Par. Nos. [0014], [0016], [0019], [0028], [0029], [0031], [0036], [0062], [0063]<br>(Family: none) | 1-9<br>1-11 |
| Y | JP 2005-125731 A  (Fuji Photo Film Co., Ltd.),<br>19 May, 2005 (19.05.05),<br>Claims; Par. Nos. [0059], [0061], [0093], [0102], [0108], [0113]<br>& US 2005/79380 A1 | 1-11 |
| Y | JP 2004-160836 A  (Mitsui Chemicals, Inc.),<br>10 June, 2004 (10.06.04),<br>Par. No. [0060]<br>(Family: none) | 10,11 |

☐   Further documents are listed in the continuation of Box C.        ☐   See patent family annex.

| | |
|---|---|
| *  Special categories of cited documents:<br>"A"  document defining the general state of the art which is not considered   to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
|---|---|
| 15 May, 2007 (15.05.07) | 29 May, 2007 (29.05.07) |

| Name and mailing address of the ISA/ | Authorized officer |
|---|---|
| Japanese Patent Office | |
| Facsimile No. | Telephone No. |

Form PCT/ISA/210 (second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003276115 A
- JP 2003300273 A
- JP 2005324406 A
- JP 9104085 A
- JP 2000122005 A
- JP 2000216049 A
- JP 2003172935 A
- JP 2003233076 A
- JP 2003322859 A
- JP 2004001296 A
- JP 2004359899 A
- JP 2004103401 A
- JP 8512256 PCT
- JP 11503195 PCT
- JP 2001508089 PCT
- JP 2001518561 PCT
- JP 2002528568 PCT
- JP 2004532330 PCT
- JP 2004533313 PCT
- JP 2005524058 PCT
- JP 5170763 A
- JP 5371224 A
- JP 6016804 A
- JP 7017958 A
- JP 7173279 A
- JP 8245783 A
- JP 8301859 A
- JP 10237056 A
- JP 10330485 A
- JP 11106380 A
- JP 11130766 A
- JP 11228558 A
- JP 11246510 A
- JP 11246540 A
- JP 11246541 A
- JP 11322735 A
- JP 2000001482 A
- JP 2000026546 A
- JP 2000191652 A
- JP 2000302774 A
- JP 2000336133 A
- JP 2001031664 A
- JP 2001031665 A
- JP 2001031666 A
- JP 2001040085 A
- JP 2003081958 A
- JP 2003089693 A
- JP 2001163882 A
- JP 2001226365 A
- JP 2001278874 A
- JP 2001278875 A
- JP 2001302651 A
- JP 2001342194 A
- JP 2002020376 A
- JP 2002080581 A
- JP 2002193965 A
- JP 2002241489 A
- JP 2002275171 A
- JP 2002275172 A
- JP 2002322268 A
- JP 2003002881 A
- JP 2003012662 A
- JP 2004091347 A
- JP 2004149486 A
- JP 2004262817 A
- JP 2005125731 A
- JP 2005171122 A
- JP 2005238446 A
- JP 2005239573 A
- JP 2005336349 A
- JP 11500422 A
- JP 2003341003 A
- JP 2004341016 A
- JP 2306247 A
- JP 62057646 A
- JP 5107999 A
- JP 5181271 A
- JP 8016080 A
- JP 8305262 A
- JP 2000047552 A
- JP 2003066816 A
- US 5759721 A
- EP 1029258 A
- JP 58037003 A
- JP 63223002 A
- JP 56152833 A
- JP 63008365 A
- JP 63008366 A
- JP 1083060 A
- JP 1290658 A
- JP 2001470 A
- JP 2196812 A
- JP 2232253 A
- JP 3017101 A
- JP 3047164 A
- JP 3048654 A
- JP 3145459 A
- JP 3200761 A

- JP 3237107 A
- JP 4001177 A
- JP 4210673 A
- JP 8188569 A
- JP 8188570 A
- JP 11029609 A
- JP 11255739 A
- JP 2001055374 A
- JP 59168441 A
- JP 59180537 A
- JP 60237443 A
- JP 61051139 A
- JP 1068746 A
- JP 4134348 A
- JP 4162040 A
- JP 5027440 A
- JP 8169870 A
- JP 8227154 A
- JP 10083079 A
- JP 11071450 A
- JP 11269138 A
- JP 2000010270 A
- JP 2001200049 A
- JP 2002297006 A
- JP 2003020339 A
- JP 2003212856 A
- JP 2005017354 A
- JP 2005536620 A
- US 3493374 A
- US 4060420 A
- GB 998949 A
- WO 2002051905 A
- JP 2000330270 A
- JP 2002265531 A
- JP 2004250650 A
- JP 2002069644 A
- JP 2002069646 A
- JP 2002299259 A
- JP 2004211160 A
- JP 2004217966 A
- JP 2004292877 A
- JP 2004315899 A
- JP 2005179693 A
- JP 2001262323 A
- JP 2001295031 A
- JP 2001348660 A
- JP 2001348662 A
- JP 2002030426 A
- JP 2002053950 A
- JP 2002060929 A
- JP 2002115049 A
- JP 2002180240 A
- JP 2002217131 A
- JP 2002249871 A
- JP 2002294436 A
- JP 2003105526 A
- JP 2004076025 A
- JP 2005034831 A
- JP 3197682 A
- JP 4216628 A
- JP 4257224 A
- JP 4311036 A
- JP 5070955 A
- JP 5090247 A
- JP 5009742 A
- JP 5117867 A
- JP 5129281 A
- JP 5171435 A
- JP 6244175 A
- JP 6280000 A
- JP 7263359 A
- JP 7335575 A
- JP 8078333 A
- JP 9017598 A
- JP 2003129236 A
- JP 2003303698 A
- JP 2005307222 A
- JP 2284485 A
- JP 5125520 A
- JP 5177163 A
- JP 5311399 A
- JP 5339389 A
- JP 6116409 A
- JP 6316757 A
- JP 7026023 A
- JP 7209863 A
- JP 9031115 A
- JP 9143681 A
- JP 9249851 A
- JP 9272703 A
- JP 9278805 A
- JP 9279332 A
- JP 9326389 A
- JP 10092800 A
- JP 10168559 A
- JP 10289902 A
- JP 11172418 A
- JP 2000087224 A
- JP 2000127186 A
- JP 2000348971 A
- JP 2001261867 A
- JP 2002275619 A
- JP 2003003250 A
- JP 2003335880 A
- JP 2005014483 A
- JP 2005178010 A
- JP 8503099 PCT
- JP 2004524958 PCT

**Non-patent literature cited in the description**

- *11290 chemical goods,* 778-787
- Organic Material used for Imaging. Bunshin Shuppan, 1993, 187-192

- Encyclopedia of Polymer Science and Engineering. John Wiley & Sons Ltd, 1985, vol. 1, 740
- **T. ASAMAKI.** Usumaku Sakusei no Kiso. Nikkan Kogyo Shinbun, March 1996, 152-154226